# EUROPEAN PATENT APPLICATION

(11) **EP 0 723 369 A1**
(43) Date of publication of application: **24.07.1996**
(21) Application number: 95200142.8
(22) Date of filing: 23.01.1995
(51) Int. Cl.: H04N 7/00

(54) **Access method retrieving Internet information through Teletext/Videotex and the reverse**

(71) Applicant: NTEX datacommunications bv, NL-3062 CE Rotterdam (NL)
(72) Inventor: Nederlof, A.G., NL-3062 CE Rotterdam (NL)

(57) **Abstract**

NTEX datacommunications developped a general purpose access method to and from the Internet World Wide Web protocol and the existing Videotex protocols (Prestel, Minitel and Cept). Also a simular access method to and from the new KIT protocol is possible.

The method of transforming the Internet World Wide Web (WWW) protocol into videotex\teletext information comprises the steps of suppression of graphic information and transforming the hypertext navigational instructions into menu driven control.

Figure 1 shows a general situtation scetch. The Internet network(2) with its over 30 million host systems (1) and over 300 million end-users terminals(3) is drawn. Most terminals(3) consist of terminal emulation programs on a diversity of computers systems, typically accessed by experienced computer users
The bottom part of the figure shows a cable television system(9) in combination with a teletext inserter(6) and a hybritext computer(5). This system allows users to access with their standard telephone(10,8,7) and television(9) set the videotex information stored in the hybritext(5) computer and all systems it is connected with.

These two existing systems are interconnected by the NTEX CommServer(4). This system can communicate with Internet as well with videotex. The **NTEX TELEWEB** product ( this claim) bridges the two worlds of information.

## Description

### Background of the invention

With the fast growing interrest in the new 'electronic superhighway' the Internet network has expanded itself with astonishing speed. Although this network existed for many years, recent developments like World Wide Web in combination with easy to use windows based access applications made it possible that a far larger audience was adressed then before.

As a result of this the offer of service is large at this moment and still growing at a fast rate.
This offer of information and services is attractive for a broad public. The problem there is that currently the information is only accessible through a computer with modem wich is not owned by the majority of the public today.

On the contrary is the availability of a standard television set with the ability for Teletext and pushbutton telephone very large.

NTEX datacommunications bv has developped an access method to link the Internet World Wide Web protocol with the existing Teletext televison sets. This means that you can access all text information available within Internet trough your standard televison without the need to buy any additional device.

Another interesing fact is that in Europe a huge amount of information currently is stored in Videotex format. Also a lot of interactive services are offered in this format. In order to reduce costs of conversion of these information systems to the Internet HTML standard NTEX datacommunications has developped an access method to link the existing Videotex information services with the Internet World Wide Web protocol.

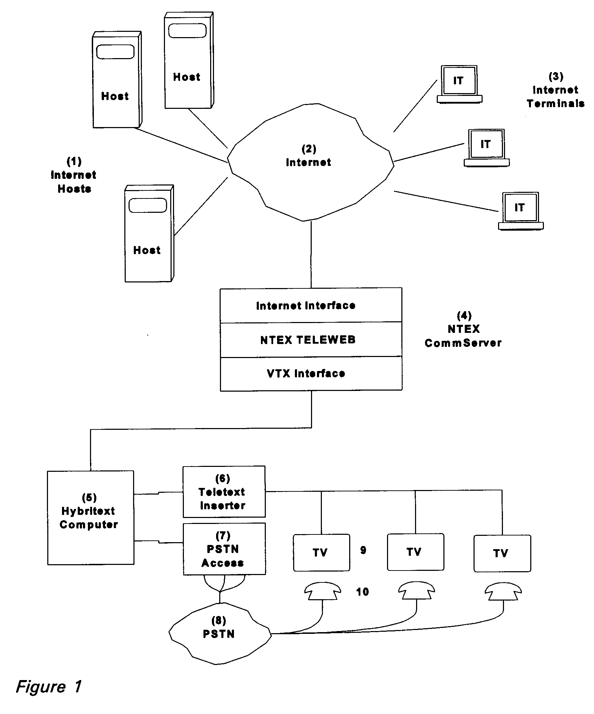

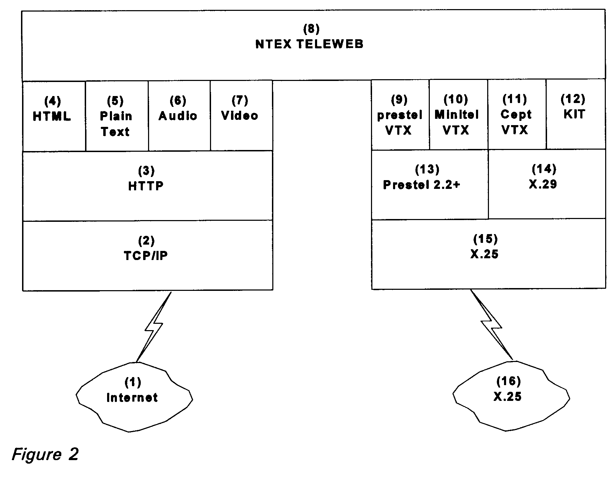

Figure 1 shows a general situtation scetch. The Internet network (2) with its over 30 million host systems (1) and over 300 million end-users terminals(3) is drawn. Most terminals(3) consist of terminal emulation programs on a diversity of computers systems, typically accessed by experienced computer users.

The bottom part of the figure shows a cable television system(9) in combination with a teletext inserter(6) and a hybritext computer(5). This system allows users to access with their standard telephone(10,8,7) and television(9) set the videotex information stored in the hybritext(5) computer and all systems it is connected with.

Also a simular access method to and from the new KIT protocol is possible.

### Disclosure of invention

These two existing systems, Internet and Videotex/Teletext, are interconnected by the NTEX CommServer(4). This system can communicate with Internet as well with videotex. The **NTEX TELEWEB** product ( this claim) bridges the two worlds of information.

The method of transforming the Internet World Wide Web (WWW) protocol into videotex\teletext information comprises the steps of suppression of graphic information and transforming the hypertext navigational instructions into menu driven control.

The essence of the first part of the invention is the combination of steps, making it possible to access Internet data through teletext/videotex devices. Although each step in itself may seem to be minor and some of them even well known, it was not believed to be possible to present the Internet information in a appropriate manner on a television set.

The second part of the invention comprises the method of translating videotex and teletel information to the Internet HTML protocol. Again the combination of steps involving the translation process makes this invention unique.

### Advantageous effects

The major goal of the first part of this invention is to allow every individual to access the information stored in the international community of Internet through his existing television set and telephone without the need to buy any additional devices. The truely simple and user friendly way this access operates invites a user (without any particular knowledge in de field of datacommuncation) to browse the globe for information.

The effect of the second part, connecting Internet to Videotex, results in the ability to connect the huge amount of information stored in videotex and teletel hosts to the Internet society. This will be of major importance for the growth of the Internet Network.

## Claims

1. NTEX datacommunications bv claims patent for a method(8) to convert HTML(4) (HyperText Markup Language) information into Videotex(9) Information.
The method(8) of transforming the HTML(4) format into Videotex(9) comprises the steps of suppression of graphic information and transforming data for hypertext links into menu controlled links.

2. NTEX datacommunications bv claims patent for a device consisting a CPU and means to transfer information from Internet to Teletext and Videotex Services.
The Internet protocols subject for conversion are HTML(4) (claim 1), Plain text(5) , audio information(6) and Video graphics(7). The Videotex/Teletext protocols to convert to are Prestel(9) with either the Prestel 2.2 + gateway(13) or the X.29 access(14), Minitel(10) (or teletel) and Cept (or BTX,BildSchirmText)(11).

3. NTEX datacommunications bv claims patent for a device consisting a CPU and means to transfer information from Teletext and Videotex Services to Internet .
The Videotex/Teletext protocols subject for conversion are Prestel(9) with either the Prestel 2.2 + gateway(13) or the X.29 access(14), Minitel (10) (or teletel) and Cept (11) (or BTX,BildSchirmText).
The Internet protocols to convert to are HTML (4) and Plain text (5).
